# EUROPEAN PATENT APPLICATION

(11) **EP 4 844 562 A1**
(43) Date of publication of application: **25.11.2026**
(21) Application number: 25863829.5
(22) Date of filing: 16.07.2025
(51) Int. Cl.: G06F 3/06, G06F 11/07, G06F 11/30

(54) **DATA COLLECTION DEVICE AND OPERATION METHOD THEREOF**

(30) Priority: 04.09.2024 KR 20240120054
(71) Applicant: LG Energy Solution, Ltd., Seoul 07335 (KR)
(72) Inventor: MIN, Sehong, Daejeon 34122 (KR)
(74) Representative: Goddar, Heinz J.
(86) International application number: PCT/KR2025/010486
(87) International publication number: WO 2026/054300

(57) **Abstract**

A data collection device mounted in a vehicle, according to one embodiment of the present disclosure, comprises: a memory storing at least one instruction; and a processor operatively connected to the memory, wherein the processor, by executing the at least one instruction, is capable of: calling a driver corresponding to a data storage medium connected to the data collection device; identifying an access request result for the data storage medium on the basis of the called driver; when access to the data storage medium is identified as completed, setting an operation mode for the data storage medium on the basis of the called driver; identifying a setting result of the operation mode; and outputting a result message on the basis of the identified setting result of the operation mode.

## Description

### Technical Field

This application claims the benefit of Korean Patent Application No. 10-2024-0120054, filed on September 4, 2024, in the Korean Intellectual Property Office, the disclosure of which is incorporated herein by reference in its entirety.

Example embodiments disclosed in the present document relate to an apparatus for collecting data and a method of an operation thereof.

### Background Art

In recent years, there has been active research and development in the field of secondary batteries. Here, secondary batteries refer to batteries capable of being charged and discharged, including both conventional Ni/Cd batteries and Ni/MH batteries and recent lithium-ion batteries. Lithium-ion batteries of secondary batteries have an advantage of having greater energy density compared to conventional Ni/Cd batteries, Ni/MH batteries, and the like. In addition, lithium-ion batteries can be manufactured in a compact and lightweight form so as to be used as a power source of a mobile device, and in recent years, their usage range has been broadened to a power source of an electric vehicle, gaining attention as a next-generation energy storage device.

As such a usage range of secondary batteries has been expanded, a technology related to a management system for using and managing secondary batteries more efficiently is increasingly important. States and operations of secondary batteries may be controlled by a battery management system (BMS). The BMS may be included in a single device with a battery.

In addition, the BMS may manage and control the battery in a state of being separated from the device including the battery. For example, the BMS may be implemented as a separate server device. In this case, the BMS may collect battery data and vehicle data from the apparatus for collecting data mounted on a vehicle and manage and control the battery by utilizing the collected data.

The apparatus for collecting data may be connected to hardware disposed in the vehicle to collect data related to the vehicle and the battery and transmit the collected data to a server such that a state of the vehicle and the battery can be analyzed. For example, the apparatus for collecting data may collect data from the hardware disposed in the vehicle by using controller area network (CAN) communication, store the data in a storage medium, and then transmit the stored data to the server through a wireless network.

Meanwhile, when the apparatus for collecting data performs access to the data storage medium, operation mode setting, or a mount operation but fails, it is difficult to normally collect data, causing trouble in data stability and reliability. In addition, a secure digital (SD) card was used as an existing data storage medium connected to the apparatus for collecting data, but the SD card is not appropriate for an in-vehicle environment (for example, temperature and vibrations), having disadvantages such as functional disorder due to intermittent data errors and insufficient data stability during a physical connection.

### Detailed Description of the Invention

### Technical Goals

According to an example embodiment of the present disclosure, an apparatus for collecting data capable of securing data stability and reliability by determining whether to re-invoke a driver corresponding to a data storage medium based on results of access to the data storage medium, operation mode setting, and/or a mount operation, and a method of an operation thereof may be provided.

According to an example embodiment of the present disclosure, an apparatus for collecting data using an embedded multi-media controller (eMMC) appropriate for an in-vehicle environment (for example, temperature and vibrations) as a data storage medium and a method of an operation thereof may be provided.

A technical task to be achieved by an example embodiment of the present disclosure is not limited to the technical tasks described above, and other technical tasks may be derived from example embodiments described below.

### Technical solutions

An apparatus for collecting data mounted on a vehicle according to an example embodiment of the present disclosure may include a memory that stores at least one instruction and a processor that is operatively connected to the memory. By executing the at least one instruction, the processor may invoke a driver corresponding to a data storage medium connected to the apparatus for collecting data, identify, based on the invoked driver, an access request result for the data storage medium, set an operation mode for the data storage medium based on the invoked driver when it is identified that access to the data storage medium is completed, identify a result of the setting of the operation mode, and output a result message based on the identified result of the setting of the operation mode.

For the apparatus for collecting data mounted on a vehicle according to an example embodiment of the present disclosure, the processor may re-invoke the driver when it is identified that the access to the data storage medium fails.

For the apparatus for collecting data mounted on a vehicle according to an example embodiment of the present disclosure, the processor may set the operation mode by setting an input/output mode for the data storage medium to a secure digital input/output (SDIO) 1-bit mode.

For the apparatus for collecting data mounted on a vehicle according to an example embodiment of the present disclosure, the processor may perform a mount operation for the data storage medium after setting the operation mode for the data storage medium, identify a result of the performance of the mount operation for the data storage medium, and identify the result of the setting of the operation mode when it is identified that the mount operation for the data storage medium is completed.

For the apparatus for collecting data mounted on a vehicle according to an example embodiment of the present disclosure, the processor may re-invoke the driver when it is identified that the mount operation for the data storage medium fails.

For the apparatus for collecting data mounted on a vehicle according to an example embodiment of the present disclosure, the processor may output a setting completion message when it is identified that the setting of the operation mode for the data storage medium is completed, identify whether the setting of the operation mode is performed a predetermined number of times or more when it is identified that the setting of the operation mode for the data storage medium fails, output a setting failure message when it is identified that the setting of the operation mode is performed the predetermined number of times or more, and re-invoke the driver when it is identified that the setting of the operation mode is performed fewer than the predetermined number of times.

For the apparatus for collecting data mounted on a vehicle according to an example embodiment of the present disclosure, the data storage medium may be an embedded multi-media controller (eMMC).

A method of an operation of an apparatus for collecting data mounted on a vehicle according to an example embodiment of the present disclosure may include invoking a driver corresponding to a data storage medium connected to the apparatus for collecting data, identifying, based on the invoked driver, an access request result for the data storage medium, setting an operation mode for the data storage medium based on the invoked driver when it is identified that access to the data storage medium is completed, identifying a result of the setting of the operation mode, and outputting a result message based on the identified result of the setting of the operation mode.

The method of an operation of an apparatus for collecting data mounted on a vehicle according to an example embodiment of the present disclosure may further include re-invoking the driver when it is identified that the access to the data storage medium fails.

For the method of an operation of an apparatus for collecting data mounted on a vehicle according to an example embodiment of the present disclosure, the setting of the operation mode for the data storage medium may include setting the operation mode for the data storage medium by setting at least one of a data input/output mode for the data storage medium, an input voltage, a communication path, and a communication frequency.

For the method of an operation of an apparatus for collecting data mounted on a vehicle according to an example embodiment of the present disclosure, the setting of the operation mode for the data storage medium may include setting the operation mode by setting the input/output mode for the data storage medium to an SDIO 1-bit mode.

The method of an operation of an apparatus for collecting data mounted on a vehicle according to an example embodiment of the present disclosure may further include performing a mount operation for the data storage medium after setting the operation mode for the data storage medium, identifying a result of the performing of the mount operation for the data storage medium, and identifying a result of the setting of the operation mode when it is identified that the mount operation for the data storage medium is completed.

The method of an operation of an apparatus for collecting data mounted on a vehicle according to an example embodiment of the present disclosure may further include re-invoking the driver when it is identified that the mount operation for the data storage medium fails.

For the method of an operation of an apparatus for collecting data mounted on a vehicle according to an example embodiment of the present disclosure, the outputting of the result message may include outputting a setting completion message when it is identified that the setting of the operation mode for the data storage medium is completed, identifying whether the setting of the operation mode is performed a predetermined number of times or more when it is identified that the setting of the operation mode for the data storage medium fails, and outputting a setting failure message when it is identified that the setting of the operation mode is performed the predetermined number of times or more, and may further include re-invoking the driver when it is identified that the setting of the operation mode is performed fewer than the predetermined number of times.

### Effects of the Invention

According to example embodiments disclosed in this document, it is possible to secure data stability and reliability by determining whether to re-invoke a driver corresponding to a data storage medium based on results of access to the data storage medium, operation mode setting, and/or a mount operation.

According to an example embodiment of the present disclosure, by using an embedded multi-media controller (eMMC) appropriate for an in-vehicle environment (for example, temperature and vibrations) as the data storage medium, it is possible to prevent issues such as functional disorder due to data errors and insufficient data stability during a physical connection.

The effects of the invention are not limited to those described above, and other effects not explicitly described may be clearly understood by those skilled in the art from the scope of the claims.

### Brief Description of Drawings

FIG. 1 is a block diagram of a system according to an example embodiment of the present disclosure.
FIG. 2 is a block diagram of an apparatus for collecting data according to an example embodiment of the present disclosure.
FIG. 3 is a diagram for describing an operation performed by the apparatus for collecting data based on a driver corresponding to a data storage medium according to an example embodiment of the present disclosure.
FIG. 4 is an operation flowchart of an apparatus for collecting data according to an example embodiment of the present disclosure.
FIG. 5 is an operation flowchart of an apparatus for collecting data according to an example embodiment of the present disclosure.
FIG. 6 is an operation flowchart of an apparatus for collecting data according to an example embodiment of the present disclosure.

### Mode for Carrying Out the Invention

For describing example embodiments, descriptions of technical contents that are well known in the art to which the present disclosure belongs and are not directly related to the present disclosure will be omitted. This is to more clearly communicate without obscuring the subject matter of the present disclosure by omitting unnecessary descriptions.

For the same reason, in the accompanying drawings, some components are exaggerated, omitted, or schematically illustrated. In addition, the size of each component does not fully reflect the actual size. The same or corresponding components in each drawing are given the same reference numerals.

Advantages and features of the present disclosure and methods of achieving them will be apparent from the following example embodiments that will be described in more detail with reference to the accompanying drawings. It should be noted, however, that the present disclosure is not limited to the following example embodiments, and may be implemented in various forms. Accordingly, the example embodiments are provided only to disclose the present disclosure and let those skilled in the art know the category of the present disclosure, and the present disclosure is only defined by the category of claims. The same reference numerals or the same reference designators denote the same components throughout the specification.

Here, it will be understood that each block of the flowchart illustrations and combinations of flowchart illustrations may be performed by computer program instructions. Since these computer program instructions may be mounted on a processor of a general-purpose computer, special-purpose computer, or other programmable data processing equipment, those instructions executed through the computer or the processor of other programmable data processing equipment may create a means to perform the functions described in flowchart block(s). These computer program instructions may be stored in a computer usable or computer readable memory that can be directed to a computer or other programmable data processing equipment to implement functionality in a particular manner, and thus computer program instructions stored in the computer usable or computer readable memory can produce an article of manufacture containing instruction means for performing the functions described in the flowchart block(s). Computer program instructions may also be mounted on a computer or other programmable data processing equipment, such that a series of operating steps may be performed on the computer or other programmable data processing equipment to create a computer-implemented process to create a computer or other programmable data. Instructions for performing the processing equipment may also provide steps for performing the functions described in the flowchart block(s).

In addition, each block may represent a portion of a module, segment, or code that includes one or more executable instructions for executing a specified logical function(s). It should also be noted that in some alternative implementations, the functions noted in the blocks may occur out of order. For example, the two blocks shown in succession may in fact be executed substantially concurrently, or the blocks may sometimes be executed in the reverse order, depending on the corresponding function.

In addition, the term "unit," refers to software or hardware components, such as an FPGA or ASIC. "Unit" performs some roles. However, "unit" is not limited to software or hardware. "Unit" may be configured to be in an addressable storage medium or to restart one or more processors. Accordingly, for example, "unit" includes components such as software components, object-oriented software components, class components, and task components, and includes processes, functions, attributes, procedures, subroutines, segments of program code, drivers, firmware, microcode, circuitry, data, databases, data structures, tables, arrays, and variables. Functions provided within components and "units" may be combined into a fewer number of components and "units" or may be further separated into additional components and "units". Furthermore, the components and "units" may be implemented to restart one or more CPUs within a device or a secure multimedia card.

The expression "at least one of A, B, and C" described in this specification may indicate the following meaning including: A alone; B alone; C alone; both A and B together; both A and C together; both B and C together; or all three of A, B, and C together.

In the present disclosure, a "terminal" may be implemented as a computer or a portable terminal capable of accessing a server or another terminal through a network. Here, the computer may include, for example, a notebook equipped with a web browser, a desktop computer, and a laptop computer. The portable terminal may be a wireless communication device ensuring a portability and a mobility, and include any type of handheld wireless communication device, for example, a tablet PC, a smartphone, a communication-based terminal such as international mobile telecommunication (IMT), code division multiple access (CDMA), W-code division multiple access (W-CDMA), and long term evolution (LTE).

In the following description, example embodiments of the present disclosure will be described in detail with reference to the drawings so that those skilled in the art can easily carry out the present disclosure. However, the present disclosure may be embodied in many different forms and is not limited to the embodiments described herein.

Hereinafter, example embodiments of the present disclosure will be described in detail with reference to the accompanying drawings.

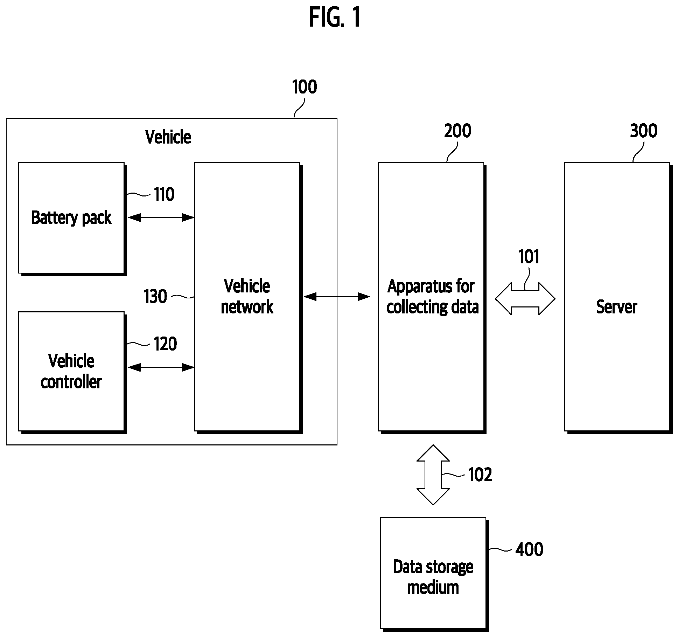

FIG. 1 is a block diagram of a system according to an example embodiment of the present disclosure.

Referring to FIG. 1, the system may include a vehicle 100, an apparatus for collecting data 200, a server 300, and a data storage medium 400.

The vehicle 100 may be an electric vehicle (EV) that receives a driving force from a battery storing power, but is not limited thereto. The technical idea of the present disclosure may be applied to electric means of transportation (for example, electric scooters) other than the vehicle 100.

According to an example embodiment, the vehicle 100 may include a battery pack 110, a vehicle controller 120, and a vehicle network 120.

According to an example embodiment, the battery pack 110 may include a battery storing power required to drive the vehicle 100 and a battery management system (BMS) for controlling an operation of the battery. The BMS may control charging and discharging of the battery and also transmit to the vehicle network 130 battery state data that includes at least one of data acquired by sensing a state of the battery (for example, a voltage, a current, resistance, and temperature) and data generated by processing the acquired data (for example, a state of charge (SOC) and a state of health (SOH)).

According to an example embodiment, the vehicle controller 120 may control overall operations of the vehicle 100 by controlling the battery pack 110, at least one sensor (for example, a radar sensor and a temperature sensor) provided in the vehicle 100, and at least one control device (for example, a driving device, a braking device, a steering device, an automated driving system (ADS), and a telematics multimedia system (TMS)). According to another example embodiment, the vehicle controller 120 may refer to an electronic control unit (ECU) for controlling partial components of the vehicle 100.

According to an example embodiment, the vehicle controller 120 may store unique vehicle identification information of the vehicle 100 and transmit the vehicle identification information in response to a request from the outside (for example, the apparatus for collecting data 200). According to an example embodiment, the vehicle identification information may include a vehicle identification number (VIN). The vehicle controller 120 may communicate with another device located inside or outside the vehicle 100 through the vehicle network 130.

According to an example embodiment, the vehicle network 130 may provide a communication environment that enables components inside the vehicle 100 to transmit and receive data to and from one another. The vehicle network 130 may be a controller area network (CAN) in which components in the vehicle 100 are connected in parallel and thus are able to communicate with one another without a host, but is not limited thereto. The vehicle network 130 may provide an environment that allows a connection of an external device (for example, the apparatus for collecting data 200) to enable the external device to communicate with another device (for example, the battery pack 110) through the vehicle network 130. However, the vehicle network 130 may have a communication protocol that varies depending on a type of the vehicle 100, and only external devices equipped with firmware compatible with the communication protocol corresponding to the type of the vehicle 100 may normally communicate by accessing the vehicle network 130. Here, vehicle type information may refer to information used to identify a model of the vehicle 100, such as a brand, a category, and a year of manufacture.

According to an example embodiment, the apparatus for collecting data 200 may be an apparatus mounted on the vehicle 100 to be connected to the vehicle network 130. For example, the apparatus for collecting data 200 may be an on-board diagnostics (OBD) port provided in the vehicle 100. The apparatus for collecting data 200 may connect to the vehicle network 130 and transmit and receive unified diagnostic service (UDS) data to acquire vehicle state information related to the state of the vehicle 100 from components in the vehicle 100. Here, the vehicle state information may include velocity data, driving distance data, driving time data, driving location data, and battery state data of the vehicle 100.

According to an example embodiment, the apparatus for collecting data 200 may transmit the vehicle state information through a connection 101 to the server 300. According to an example embodiment, the connection 101 between the apparatus for collecting data 200 and the server 300 may be a communication connection through a wired and/or wireless network. In an example embodiment, the wired network may be based on local area network (LAN) communication or power line communication. In an example embodiment, the wireless network may be based on a short-range communication network (for example, Bluetooth, wireless fidelity (Wi-Fi), or infrared data association (IrDA)), or a long-range communication network (for example, a cellular network, a 4G network, or a 5G network).

According to an example embodiment, the server 300 may receive the vehicle state information from the apparatus for collecting data 200 by transmitting and receiving data to and from the apparatus for collecting data 200 and may provide a management service for the vehicle 100 or the battery pack 110 by storing and analyzing the vehicle state information.

According to an example embodiment, the apparatus for collecting data 200 may store the vehicle state information through a connection 102 in the data storage medium 400. According to an example embodiment, the connection 102 between the apparatus for collecting data 200 and the data storage medium 400 may be a data communication bus for connecting a memory interface provided in the apparatus for collecting data 200 and the data storage medium 400. Here, the memory interface may be a component of the apparatus for collecting data 200 that operates to provide mechanical and electrical connections for various memory media.

According to an example embodiment, the data storage medium 400 may be an embedded memory. For example, the data storage medium 400 may be an embedded multi-media controller (eMMC).

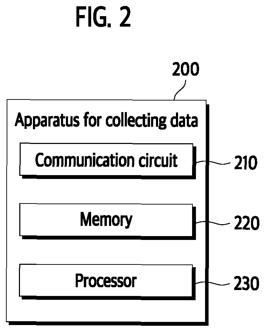

FIG. 2 is a block diagram of an apparatus for collecting data 200 according to an example embodiment of the present disclosure. The apparatus for collecting data 200 of FIG. 2 has a configuration identical to that of the apparatus for collecting data 200 of FIG. 2, and thus redundant descriptions with the above-mentioned content may be omitted.

Referring to FIG. 2, the apparatus for collecting data 200 may include a communication circuit 210, a memory 220, and a processor 230. According to an example embodiment, the apparatus for collecting data 200 illustrated in FIG. 2 may further include at least one component (for example, a display, an input device, or an output device) other than components illustrated in FIG. 2.

According to an example embodiment, the communication circuit 210 may establish a wired communication channel and/or a wireless communication channel between the apparatus for collecting data 200 and an electronic device (for example, the server 300 and the data storage medium 400) and transmit and receive data with the electronic device through the established communication channel.

According to an example embodiment, the memory 220 may include a volatile memory and/or a non-volatile memory.

According to an example embodiment, the memory 220 may store data used by at least one component (for example, the processor 230) of the apparatus for collecting data 200. For example, the data may include software (or an instruction related thereto), input data, or output data. In an example embodiment, the instruction may enable, when executed by the processor 230, the apparatus for collecting data 200 to perform operations defined by the instruction.

According to an example embodiment, the memory 220 may store a driver corresponding to the data storage medium 400. For example, the driver may perform at least one of an access request for the data storage medium 400, identification of an access request result, operation mode setting, and a mount operation.

According to an example embodiment, the processor 230 may be implemented as a computer or a similar device according to hardware, software, or a combination thereof. The processor 230 may be implemented in a form of an electronic circuit in terms of hardware that processes an electrical signal and performs a control function, and may be implemented in a form of a program in terms of software that drives the hardware processor 230. According to an example embodiment, the processor 230 may be operatively connected to components (for example, the communication circuit 210 and/or the memory 220) included in the apparatus for collecting data 200 to control the connected components.

According to an example embodiment, the processor 230 may include a central processing unit, an application processor, a graphics processing unit, a neural processing unit (NPU), an image signal processor, a sensor hub processor, or a communication processor.

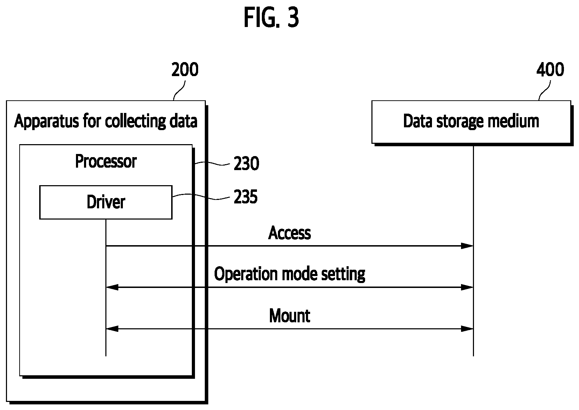

Hereinafter, with reference to FIG. 3, operations performed by the apparatus for collecting data 200 by invoking the driver corresponding to the data storage medium 400 stored in the memory 220 will be described.

FIG. 3 is a diagram for describing an operation performed by the apparatus for collecting data 200 based on a driver corresponding to a data storage medium 400 according to an example embodiment of the present disclosure.

Referring to FIG. 3, the processor 230 may invoke a driver 235 (for example, an eMMC driver) corresponding to the data storage medium 400 stored in the memory 220 and perform, based on the invoked driver 235, various operations related to the data storage medium 400.

According to an example embodiment, the processor 230 may request access to the data storage medium 400 based on the driver 235. In addition, the processor 230 may identify, based on the driver 235, an access request result for the data storage medium 400.

According to an example embodiment, the processor 230 may set an operation mode for the data storage medium 400 based on the driver 235 when it is identified that access to the data storage medium 400 is completed. According to an example embodiment, the processor 230 may set an operation mode for the data storage medium 400 by setting at least one of an input/output mode for the data storage medium 400, an input voltage, a communication path, and a communication frequency. For example, the processor 230 may set the data input/output mode for the data storage medium 400 as a secure digital input/output (SDIO) 1-bit mode. In addition, the processor 230 may set the number of data buses used for communication with the data storage medium 400 and whether to apply a pull-up resistor inside the data buses.

According to an example embodiment, the processor 230 may re-invoke the driver 235 stored in the memory 220 when it is identified that the access to the data storage medium 400 fails. In this case, the processor 230 may perform operations described in the present disclosure again based on the re-invoked driver 235.

According to an example embodiment, the processor 230 may perform a mount operation for the data storage medium 400. For example, the processor 230 may perform the mount operation for the data storage medium 400 based on the driver 235 after setting the operation mode for the data storage medium 400. Here, the mount operation may be processing in which the processor 230 accesses the data storage medium 400 as a storage to execute data reading and writing. For example, the processor 230 may connect the processor 230 and a specific directory of the data storage medium 400 through the mount operation.

According to an example embodiment, the processor 230 may identify a result of the performance of the mount operation for the data storage medium 400.

According to an example embodiment, the processor 230 may re-invoke the driver 235 stored in the memory 220 when it is identified that the mount operation for the data storage medium 400 fails. In this case, the processor 230 may perform operations described in the present disclosure again based on the re-invoked driver 235.

According to an example embodiment, the processor 230 may identify a result of the setting of the operation mode for the data storage medium 400 when it is identified that the mount operation for the data storage medium 400 is completed. According to another example embodiment, the processor 230 may identify a result of the setting of the operation mode for the data storage medium 400 regardless of the result of the performance of the mount operation for the data storage medium 400.

According to an example embodiment, the processor 230 may output a setting completion message when it is identified that the setting of the operation mode for the data storage medium 400 is completed. For example, the processor 230 may output the setting completion message through an output device (for example, a display) provided in the apparatus for collecting data 200. For another example, the processor 230 may transmit the setting completion message to an external device (for example, the server 300) by using the communication circuit 210.

According to an example embodiment, the processor 230 may identify whether the setting of the operation mode for the data storage medium 400 is performed a predetermined number of times (for example, three times) or more when the setting of the operation mode for the data storage medium 400 fails.

According to an example embodiment, the processor 230 may output a setting failure message when it is identified that the setting of the operation mode for the data storage medium 400 is performed the predetermined number of times or more. For example, the processor 230 may output the setting failure message through an output device (for example, a display) provided in the apparatus for collecting data 200. For another example, the processor 230 may transmit the setting failure message to an external device (for example, the server 300) by using the communication circuit 210.

According to an example embodiment, the processor 230 may re-invoke the driver 235 stored in the memory 220 when it is identified that the setting of the operation mode for the data storage medium 400 is performed fewer than the predetermined number of times. In this case, the processor 230 may perform operations described in the present disclosure again based on the re-invoked driver 235.

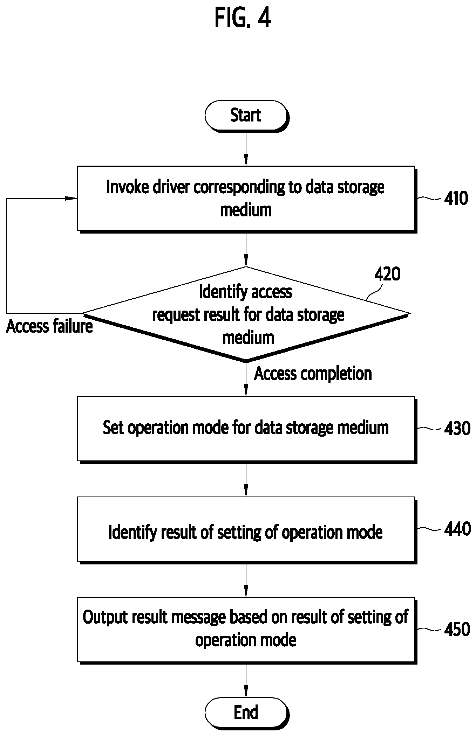

FIG. 4 is an operation flowchart of an apparatus for collecting data according to an example embodiment of the present disclosure. Since a method of an operation of FIG. 4 may be performed by the apparatus for collecting data 200 of FIG. 1 and FIG. 2, redundant descriptions with the above-mentioned content may be omitted and may be described by using the components of FIG. 1 and FIG. 2.

An example embodiment illustrated in FIG. 4 is merely an example. An order of operations according to various example embodiments of the present disclosure may be different from that illustrated in FIG. 4. Partial operations illustrated in FIG. 4 may be omitted, an order of operations may be changed, or operations may be combined.

Referring to FIG. 4, in operation 410, the apparatus for collecting data 200 may invoke a driver corresponding to the data storage medium 400. Here, the driver may be stored in the memory 220 of the apparatus for collecting data 200.

In operation 420, the apparatus for collecting data 200 may identify an access request result for the data storage medium 400 based on the driver invoked in operation 410.

In operation 420, when it is identified that access to the data storage medium 400 fails, the apparatus for collecting data 200 may return to operation 410 and re-invoke the driver corresponding to the data storage medium 400.

In operation 420, when it is identified that the access to the data storage medium 400 is completed, in operation 430, the apparatus for collecting data 200 may set an operation mode for the data storage medium 400 based on the driver invoked in operation 410. According to an example embodiment, the apparatus for collecting data 200 may set the operation mode for the data storage medium 400 by setting at least one of an input/output mode for the data storage medium 400, an input voltage, a communication path, and a communication frequency.

In operation 440, the apparatus for collecting data 200 may identify a result of the setting of the operation mode for the data storage medium 400 performed in operation 430.

In operation 450, the apparatus for collecting data 200 may output a result message based on the result of the setting of the operation mode for the data storage medium 400 identified in operation 440.

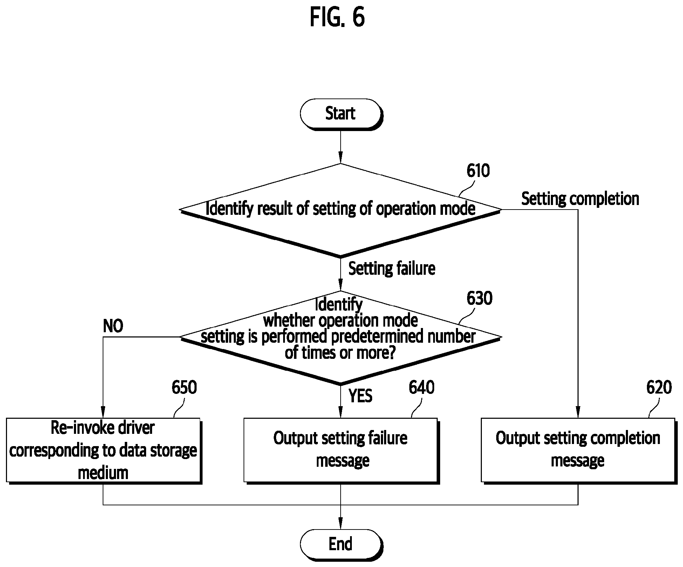

Operation 440 and operation 450 of identifying, by the apparatus for collecting data 200, the result of the setting of the operation mode for the data storage medium 400 and outputting the result message based on the identified result will be described in more detail through FIG. 6 that will be described below.

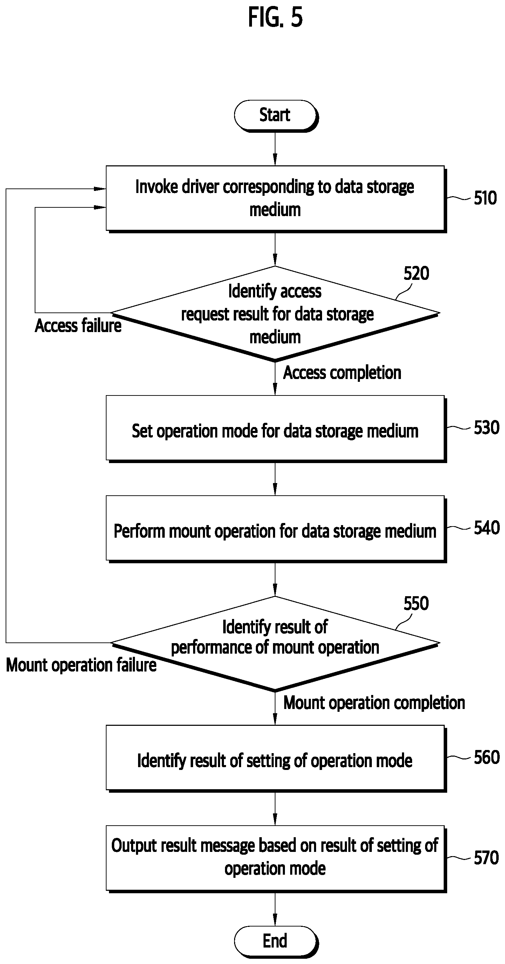

FIG. 5 is an operation flowchart of an apparatus for collecting data according to an example embodiment of the present disclosure. Since a method of an operation of FIG. 5 may be performed by the apparatus for collecting data 200 of FIG. 1 and FIG. 2, redundant descriptions with above-mentioned content may be omitted and may be described by using the components of FIG. 1 and FIG. 2.

An example embodiment illustrated in FIG. 5 is merely an example. An order of operations according to various example embodiments of the present disclosure may be different from that illustrated in FIG. 5. Partial operations illustrated in FIG. 5 may be omitted, an order of operations may be changed, or operations may be combined.

Referring to FIG. 5, in operation 510, the apparatus for collecting data 200 may invoke a driver corresponding to the data storage medium 400. Here, the driver may be stored in the memory 220 of the apparatus for collecting data 200.

In operation 520, the apparatus for collecting data 200 may identify an access request result for the data storage medium 400 based on the invoked driver.

In operation 520, when it is identified that access to the data storage medium 400 fails, the apparatus for collecting data 200 may return to operation 510 and re-invoke the driver corresponding to the data storage medium 400.

In operation 520, when it is identified that the access to the data storage medium 400 is completed, in operation 530, the apparatus for collecting data 200 may set an operation mode for the data storage medium 400 based on the driver invoked in operation 510. According to an example embodiment, the apparatus for collecting data 200 may set the operation mode for the data storage medium 400 by setting at least one of an input/output mode for the data storage medium 400, an input voltage, a communication path, and a communication frequency.

In operation 540, the apparatus for collecting data 200 may perform a mount operation for the data storage medium 400. Here, the mount operation may be processing in which the apparatus for collecting data 200 accesses the data storage medium 400 as a storage to execute data reading and writing.

In operation 550, the apparatus for collecting data 200 may identify a result of the performance of the mount operation of operation 540.

In operation 550, when it is identified that the mount operation fails, the apparatus for collecting data 200 may re-invoke the driver corresponding to the data storage medium 400.

In operation 550, when it is identified that the mount operation is completed, in operation 560, the apparatus for collecting data 200 may identify a result of the setting of the operation mode for the data storage medium 400 performed in operation 530.

In operation 570, the apparatus for collecting data 200 may output a result message based on the result of the setting of the operation mode for the data storage medium 400 identified in operation 560.

Operation 560 and operation 570 of identifying, by the apparatus for collecting data 200, the result of the setting of the operation mode for the data storage medium 400 and outputting the result message based on the identified result will be described in more detail through FIG. 6 that will be described below.

FIG. 6 is an operation flowchart of an apparatus for collecting data according to an example embodiment of the present disclosure. Since a method of an operation of FIG. 6 may be performed by the apparatus for collecting data 200 of FIG. 1 and FIG. 2, redundant descriptions with above-mentioned content may be omitted and may be described by using the components of FIG. 1 and FIG. 2.

An example embodiment illustrated in FIG. 6 is merely an example. An order of operations according to various example embodiments of the present disclosure may be different from that illustrated in FIG. 6. Partial operations illustrated in FIG. 6 may be omitted, an order of operations may be changed, or operations may be combined.

Referring to FIG. 6, in operation 610, the apparatus for collecting data 200 may identify the result of setting of the operation mode for the data storage medium 400 performed in operation 430 (or operation 530) of FIG. 4 (or FIG. 5).

In operation 610, when it is identified that the setting of the operation mode for the data storage medium 400 is completed, in operation 620, the apparatus for collecting data 200 may output a setting completion message. For example, the apparatus for collecting data 200 may output the setting completion message through an output device (for example, a display) provided in the apparatus for collecting data 200. For another example, the apparatus for collecting data 200 may transmit the setting completion message to an external device (for example, the server 300) by using the communication circuit 210.

In operation 610, when it is identified that the setting of the operation mode for the data storage medium 400 fails, in operation 630, the apparatus for collecting data 200 may identify whether the setting of the operation mode for the data storage medium 400 is performed a predetermined number of times (for example, three times) or more.

In operation 630, when it is identified that the setting of the operation mode for the data storage medium 400 the predetermined number of times or more ("yes"), in operation 640, the apparatus for collecting data 200 may output a setting failure message. For example, the apparatus for collecting data 200 may output the setting failure message through an output device (for example, a display) provided in the apparatus for collecting data 200. For another example, the apparatus for collecting data 200 may transmit the setting failure message to an external device (for example, the server 300) by using the communication circuit 210.

In operation 630, when it is identified that the setting of the operation mode for the data storage medium 400 is performed fewer than the predetermined number of times ("No"), in operation 650, the apparatus for collecting data 200 may re-invoke a driver corresponding to the data storage medium 400.

The apparatus for collecting data according to the above-mentioned example embodiments may include a processor, a storage that stores and executes program data, a permanent storage such as a disk drive, a communication port that communicates with an external device, and a user interface device such as a touch panel, a key, and an icon. Methods implemented as software modules or algorithms may be stored in a computer-readable recording medium as computer-readable codes or program instructions executable by the processor. Here, the computer-readable recording medium may include a magnetic storage medium (for example, a read-only memory (ROM), a random-Access memory (RAM), a floppy disk, a hard disk) and an optical reading medium (for example, a CD-ROM, a digital versatile disc (DVD)). The computer-readable recording medium may be distributed across computer systems connected through a network, and computer-readable codes may be stored and executed in a distributed manner. The medium may be readable by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that components may be executed by software programming or software components, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing. The terms "mechanism", "component", "means", and "configuration" may be widely used and are not limited to mechanical and physical elements. These terms may include meaning of a series of routines of software in association with the processor.

The above-described example embodiments are merely examples, and other example embodiments may be implemented within the scope of the following claims.

## Claims

1. An apparatus for collecting data mounted on a vehicle, the apparatus comprising:
a memory configured to store at least one instruction; and
a processor operatively connected to the memory,
wherein, by executing the at least one instruction, the processor is configured to:
invoke a driver corresponding to a data storage medium connected to the apparatus for collecting data;
identify, based on the invoked driver, an access request result for the data storage medium;
set an operation mode for the data storage medium based on the invoked driver when it is identified that access to the data storage medium is completed;
identify a result of setting of the operation mode; and
output a result message based on the identified result of the setting of the operation mode.

2. The apparatus of claim 1, wherein the processor is configured to re-invoke the driver when it is identified that the access to the data storage medium fails.

3. The apparatus of claim 1, wherein the processor is configured to set the operation mode for the data storage medium by setting at least one of a data input/output mode for the data storage medium, an input voltage, a communication path, and a communication frequency.

4. The apparatus of claim 3, wherein the processor is configured to set the operation mode by setting the input/output mode for the data storage medium to a secure digital input/output (SDIO) 1-bit mode.

5. The apparatus of claim 1, wherein the processor is configured to:
perform a mount operation for the data storage medium after setting the operation mode for the data storage medium;
identify a result of performance of the mount operation for the data storage medium; and
identify the result of the setting of the operation mode when it is identified that the mount operation for the data storage medium is completed.

6. The apparatus of claim 5, wherein the processor is configured to re-invoke the driver when it is identified that the mount operation for the data storage medium fails.

7. The apparatus of claim 1, wherein the processor is configured to:
output a setting completion message when it is identified that the setting of the operation mode for the data storage medium is completed;
identify whether the setting of the operation mode is performed a predetermined number of times or more when it is identified that the setting of the operation mode for the data storage medium fails;
output a setting failure message when it is identified that the setting of the operation mode is performed the predetermined number of times or more; and
re-invoke the driver when it is identified that the setting of the operation mode is performed fewer than the predetermined number of times.

8. The apparatus of claim 1, wherein the data storage medium is an embedded multi-media controller (eMMC).

9. A method of an operation of an apparatus for collecting data mounted on a vehicle, the method comprising:
invoking a driver corresponding to a data storage medium connected to the apparatus for collecting data;
identifying, based on the invoked driver, an access request result for the data storage medium;
setting an operation mode for the data storage medium based on the invoked driver when it is identified that access to the data storage medium is completed;
identifying a result of the setting of the operation mode; and
outputting a result message based on the identified result of the setting of the operation mode.

10. The method of claim 9, further comprising re-invoking the driver when it is identified that the access to the data storage medium fails.

11. The method of claim 9, wherein the setting of the operation mode for the data storage medium comprises setting the operation mode for the data storage medium by setting at least one of a data input/output mode for the data storage medium, an input voltage, a communication path, and a communication frequency.

12. The method of claim 11, wherein the setting of the operation mode for the data storage medium comprises setting the operation mode by setting the input/output mode for the data storage medium to a secure digital input/output (SDIO) 1-bit mode.

13. The method of claim 9, further comprising:
performing a mount operation for the data storage medium after setting the operation mode for the data storage medium;
identifying a result of the performing of the mount operation for the data storage medium; and
identifying a result of the setting of the operation mode when it is identified that the mount operation for the data storage medium is completed.

14. The method of claim 13, further comprising re-invoking the driver when it is identified that the mount operation for the data storage medium fails.

15. The method of claim 9, wherein the outputting of the result message comprises:
outputting a setting completion message when it is identified that the setting of the operation mode for the data storage medium is completed;
identifying whether the setting of the operation mode is performed a predetermined number of times or more when it is identified that the setting of the operation mode for the data storage medium fails; and
outputting a setting failure message when it is identified that the setting of the operation mode is performed the predetermined number of times or more, and
further comprises re-invoking the driver when it is identified that the setting of the operation mode is performed fewer than the predetermined number of times.
